(19) **Europäisches Patentamt / European Patent Office / Office européen des brevets**

(11) **EP 3 223 057 B1**

(12) **EUROPEAN PATENT SPECIFICATION**

(45) Date of publication and mention
of the grant of the patent:
**15.04.2020 Bulletin 2020/16**

(21) Application number: **15860468.6**

(22) Date of filing: **23.10.2015**

(51) Int Cl.:
***G02B 27/01*** *(2006.01)*      ***B60K 35/00*** *(2006.01)*

(86) International application number:
**PCT/JP2015/005330**

(87) International publication number:
**WO 2016/079927 (26.05.2016 Gazette 2016/21)**

(54) **HEAD-UP DISPLAY AND VEHICLE**

HEADUP-ANZEIGE UND FAHRZEUG

AFFICHAGE TÊTE HAUTE ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2014 JP 2014234416**

(43) Date of publication of application:
**27.09.2017 Bulletin 2017/39**

(73) Proprietor: **Panasonic Intellectual Property
Management Co., Ltd.
Osaka-shi, Osaka 540-6207 (JP)**

(72) Inventors:
• **KUZUHARA, Satoshi
Osaka 540-6207 (JP)**

• **OKAYAMA, Hiroaki
Osaka 540-6207 (JP)**

(74) Representative: **Grünecker Patent- und
Rechtsanwälte
PartG mbB
Leopoldstraße 4
80802 München (DE)**

(56) References cited:
**JP-A- H04 247 489      JP-A- H05 341 226
JP-A- H05 341 226      JP-A- 2008 268 883
JP-A- 2008 268 883      JP-A- 2012 058 294
JP-A- 2012 058 294**

**Description**

TECHNICAL FIELD

The present disclosure relates to a head-up display that allows an observer to view an image displayed on a display surface of a display device through a projection optical system as a virtual image.

BACKGROUND ART

PTL 1 discloses a head-up display that is provided with a Fresnel lens and a concave mirror, magnifies an image displayed on a display surface using the Fresnel lens, and allows an observer to view the image as a virtual image. PTL 2 discloses a head-up display that is provided with a long focal length lens, magnifies an image displayed on a display surface using the long focal length lens, and allows an observer to view the image as a virtual image. JP 2012 058294 A relates to a virtual image observation optical system. JP H05 341226 A relates to an optical system.

Citation List

Patent Literature

    PTL 1: Unexamined Japanese Patent Publication No. 2007-272061
    PTL 2: Unexamined Japanese Patent Publication No. H04-247489

SUMMARY OF THE INVENTION

TECHNICAL PROBLEM

An object of the present disclosure is to provide a head-up display with low image distortion over an entire viewing area for an observer.

SOLUTION TO PROBLEM

A head-up display according to the present invention is defined in claim 1. Further advantageous embodiments are defined in the dependent claims.

ADVANTAGEOUS EFFECT OF INVENTION

The present disclosure provides a head-up display with low image distortion over the entire viewing area for an observer.

BRIEF DESCRIPTION OF DRAWINGS

    FIG. 1 is a schematic diagram of a vehicle equipped with a head-up display according to the present disclosure.
    FIG. 2 is a schematic diagram illustrating a head-up display according to a first exemplary embodiment.
    FIG. 3 is a diagram illustrating a relationship between a first reflective element and a reference light beam according to the first exemplary embodiment.
    FIG. 4 is a diagram illustrating a configuration of a projection optical system according to the first exemplary embodiment.
    FIG. 5 is a schematic diagram illustrating a virtual image viewed from a viewing area for an observer.
    FIG. 6 is a diagram representing image distortion in a viewing area for the observer according to Numerical Example 1.
    FIG. 7 is a diagram representing image distortion in a viewing area for the observer according to Numerical Example 2.
    FIG. 8 is a diagram representing image distortion in a viewing area for the observer according to Numerical Example 3.
    FIG. 9 is a diagram representing image distortion in a viewing area for the observer according to Numerical Example 4.
    FIG. 10 is a schematic diagram illustrating a head-up display according to a second exemplary embodiment.
    FIG. 11 is a schematic diagram illustrating a head-up display according to a third exemplary embodiment.

FIG. 12 is a schematic diagram illustrating a head-up display according to a fourth exemplary embodiment.
FIG. 13 is a diagram of the coordinate system of Numerical Examples 1 to 4 according to the first exemplary embodiment.

DESCRIPTION OF EMBODIMENTS

Exemplary embodiments will now be described in detail with reference to the drawings. Unnecessary details, however, may be omitted. For example, detailed description of well-known matters and repeated description of substantially the same structure may be omitted. This is to avoid unnecessary redundancy in the following description and to facilitate understanding by those skilled in the art.
The inventors provide the drawings and the following description to enable those skilled in the art to have a thorough understanding of the present disclosure, and these are not intended to limit the subject matter defined by the claims.

FIRST EXEMPLARY EMBODIMENT

[1-1 Configuration]

[1-1-1 Overall configuration of head-up display]

Specific exemplary embodiments and examples of head-up display 100 according to the present disclosure are described below with reference to the drawings.

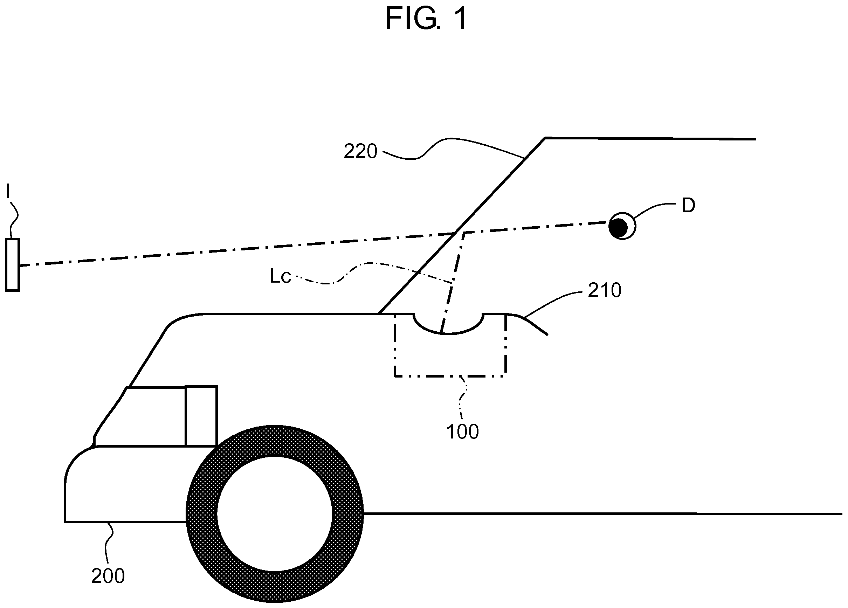

FIG. 1 is a schematic diagram of vehicle 200 equipped with head-up display 100 according to the present disclosure.
As illustrated in FIG. 1, head-up display 100 is disposed in dashboard 210 located below windshield 220 of vehicle 200.

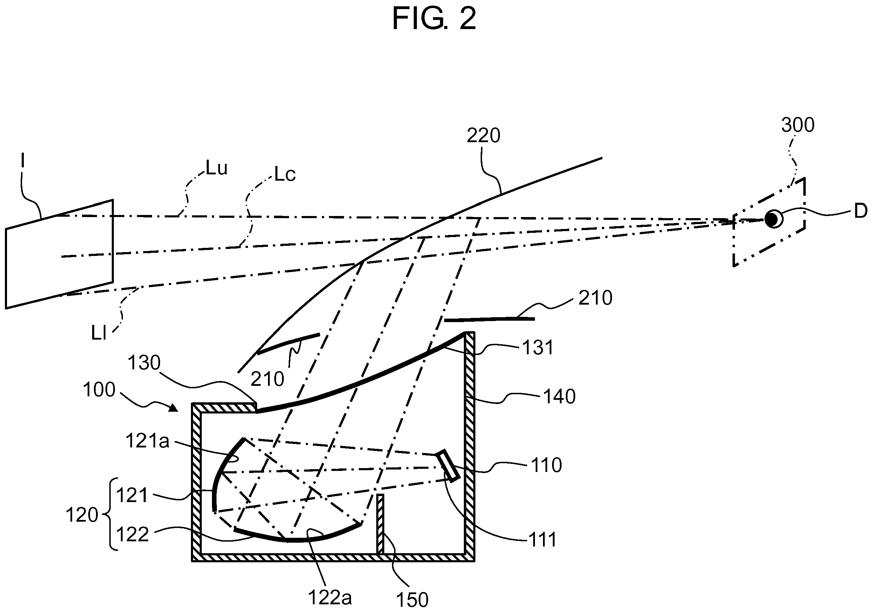

FIG. 2 is a schematic diagram illustrating head-up display 100 according to a first exemplary embodiment. As illustrated in FIG. 2, head-up display 100 includes housing 140, projection optical system 120, and display device 110. Head-up display 100 allows observer D in vehicle 200 to view an image displayed on display surface 111 of display device 110 as virtual image I. The image displayed on display surface 111 is reflected by windshield 220, directed to viewing area 300 (sometimes referred to as an eye box) for observer D, and viewed as virtual image I by observer D.
Here, a light beam to form the upper end of virtual image I is referred to as light beam Lu, and a light beam to form the lower end of virtual image I is referred to as light beam Ll. A light beam to form the center of virtual image I (i.e., a light beam that is emitted from the center of display surface 111 and reaches the center of viewing area 300) is referred to as reference light beam Lc. The viewpoint of observer D is assumed to be in the center of viewing area 300.
Housing 140 has opening 130. Opening 130 is provided with transparent opening cover 131. Opening cover 131 is partially curved. Therefore, external light, such as, for example, sunlight reflected on opening cover 131, is difficult to reach observer D. Lens-shaped opening cover 131 allows the magnification of virtual image I to be adjusted. Opening cover 131 is not essential in head-up display 100 according to the first exemplary embodiment. Housing 140 is also not essential in head-up display 100 according to the first exemplary embodiment, and dashboard 210 of vehicle 200 may be substituted for housing 140.
Projection optical system 120 includes first mirror 121 as a first reflective element and second mirror 122 as a second reflective element. Reference light beam Lc, which is reflected by first mirror 121 and is incident on second mirror 122, has a horizontal vector component directed toward display surface 111. Reference light beam Lc, which is emitted from display surface 111 and is incident on first mirror 121, has a vector component directed forward of vehicle 200. An image displayed on display surface 111 is reflected by first mirror 121, then reflected by second mirror 122, and further reflected by windshield 220 to reach viewing area 300, and is viewed as virtual image I by observer D. Here, viewing area 300 refers to a movable area of the eye where observer D can view entire virtual image I without missing part of virtual image I.
Display device 110 includes a liquid crystal display, a backlight unit including a light source, a diffusion plate, and a polarized lens, which are not shown. In display device 110, a controller such as, for example, a microcontroller (not shown) controls display image information. Display surface 111 can display various types of information, such as road guidance, distance to a vehicle in front, remaining capacity of a vehicle's battery, and current vehicle speed, as the display image information. Display device 110 is, for example, a liquid crystal display, organic light emitting diodes (electroluminescence), or a plasma display. A projector or a scanning laser can be used instead of a display device.
Housing 140 has light shield 150 therein. Light shield 150 prevents stray light caused by a light beam emitted from display surface 111 of display device 110 being directly incident on second mirror 122 without being reflected by first mirror 121. Light shield 150 is independently secured to housing 140. Securement of light shield 150 to housing 140 is not limited to the above manner, and light shield 150 may be integrally secured to display device 110 or second mirror 122.

[1-1-2 Arrangement configuration of projection optical system and display device]

According to head-up display 100 of the first exemplary embodiment, display device 110 is disposed vertically above second mirror 122 in housing 140. For display device 110, it is preferable that at least part of display surface 111 is disposed vertically above second mirror 122. This allows housing 140 to be made smaller without light beam Ll interfering with second mirror 122.

Display surface 111 of display device 110 is directed toward first mirror 121. Here, display device 110 is preferably disposed such that reference light beam Lc emitted from display surface 111 is inclined with respect to display surface 111. This prevents stray light caused by external light entering housing 140 and being reflected by display surface 111 of display device 110.

Reflective surface 121a of first mirror 121 is oriented in a direction where an image, displayed on display surface 111, is reflected toward second mirror 122. Reflective surface 121a of first mirror 121 is also eccentric where an image, displayed on display surface 111, is reflected toward second mirror 122.

Here, a reflective area of second mirror 122 is larger than a reflective area of first mirror 121 in order to magnify the image displayed on display surface 111 and to display the image as virtual image I. The reflective area is the area of a mirror to reflect incident light, and as the reflective area is greater, the mirror becomes larger.

In housing 140, second mirror 122 is disposed on a display device side in the horizontal direction relative to first mirror 121. When installed in vehicle 200, second mirror 122 is disposed vehicle rearward of first mirror 121. Reflective surface 122a of second mirror 122 is oriented in the direction in which reflective light from first mirror 121 is incident on windshield 220. Reflective surface 122a of second mirror 122 is also eccentric so that the reflective light from first mirror 121 is incident on windshield 220.

In the first exemplary embodiment, first mirror 121 is a mirror whose reflective surface 121a has a concave shape and a free-form surface shape. Second mirror 122 is also a mirror whose reflective surface 122a has a concave shape and a free-form surface shape. Concave reflective surface 122a of second mirror 122 can properly correct image distortion (i.e., image distortion in which the image displayed on display surface 111 is asymmetrically and eccentrically distorted) occurring in first mirror 121. Concave reflective surfaces 121a, 122a of first mirror 121 and second mirror 122 allow observer D to view virtual image I magnified as compared to the image displayed on display surface 111. Alternatively, the reflective surface of first mirror 121 may have a free-form surface shape, and the reflective surface of second mirror 122 may have a free-form surface shape, or planar shape.

Additionally, concave reflective surfaces 121a, 122a of first mirror 121 and second mirror 122 can distribute power owned by a single mirror, thereby reducing sensitivity of distortion in assembling.

First mirror 121 uses a free-form surface shape as reflective surface 121a. This is to correct the distortion of virtual image I caused by reflection and to allow for viewing good virtual image I over entire viewing area 300.

Second mirror 122 uses a free-form surface shape as reflective surface 122a. This is to correct the distortion of virtual image I caused by reflection and to allow for viewing good virtual image I over entire viewing area 300.

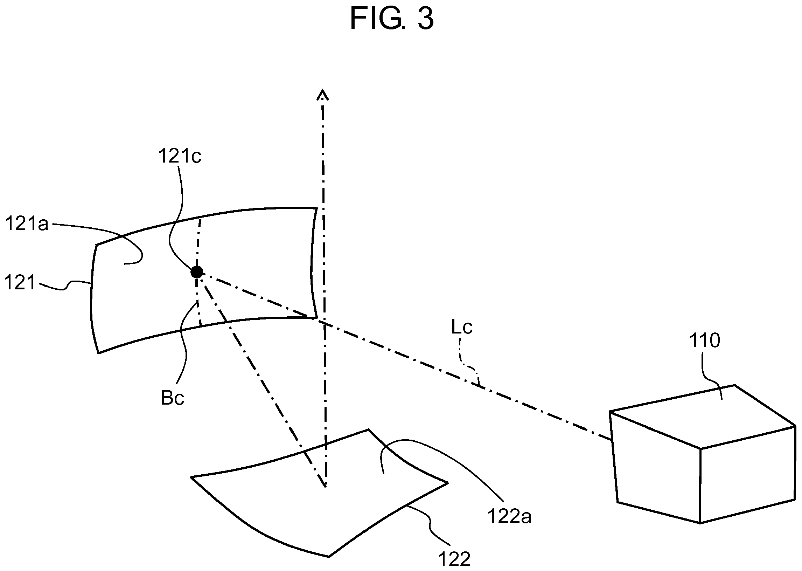

FIG. 3 is a diagram illustrating a relationship between first mirror 121 and reference light beam Lc according to the first exemplary embodiment.

Reference light beam Lc is emitted from the center of display surface 111 of display device 110, is incident on reflective surface 121a of first mirror 121, and is reflected at reference intersection point 121c, which is an intersection of reference light beam Lc with reflective surface 121a. Here, a plane including reference light beam Lc incident on first mirror 121 and reference light beam Lc reflected by first mirror 121 is defined as a reference plane. An intersection of reflective surface 121a of first mirror 121 with the reference plane is defined as reference intersection line Bc.

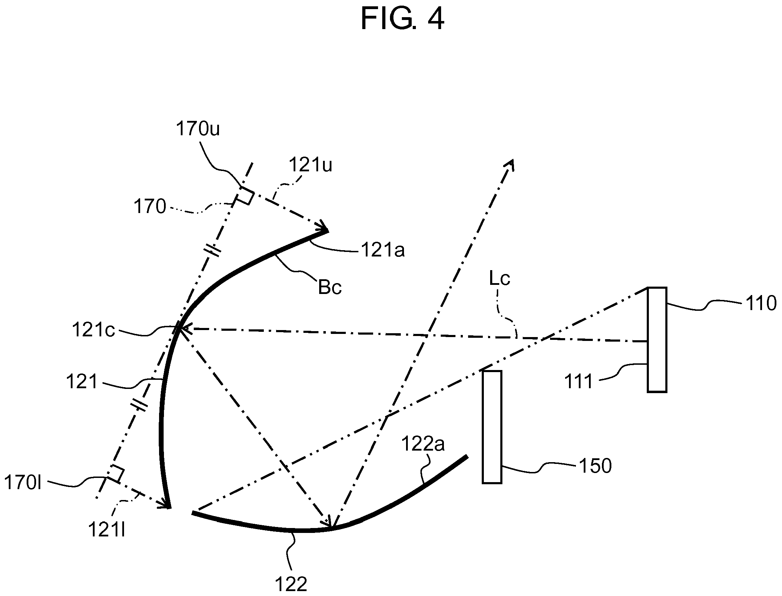

FIG. 4 is a diagram illustrating a configuration of projection optical system 120 according to the first exemplary embodiment.

A tangent plane of reflective surface 121a of first mirror 121 at reference intersection point 121c is defined as reference tangent plane 170. A vertically upper point and a vertically lower point, which are equidistant from reference intersection point 121c on reference tangent plane 170, are referred to as point 170u and point 1701, respectively. Respective heights from the two points to reflective surface 121a of first mirror 121 are referred to as a sag. Here, when perpendiculars 121u, 1211 extending from the two points, point 170u and point 1701, and normal to reference tangent plane 170 intersect with reference intersection line Bc, a sag at point 170u is greater than a sag at point 1701. Thus, there is provided head-up display 100 with low image distortion over entire viewing area 300 for observer D.

While first mirror 121 for use in head-up display 100 according to the first exemplary embodiment is provided with reflective surface 121a having a rotationally asymmetric shape, reflective surface 121a may have a "saddle" surface shape in which the sign of curvature is different in the X and Y directions.

While second mirror 122 for use in head-up display 100 according to the first exemplary embodiment is provided with reflective surface 122a having a rotationally asymmetric shape, reflective surface 122a may have a "saddle" surface shape in which the sign of curvature is different in the X and Y directions.

[1-1-3 Arrangement configuration of light shield]

Housing 140 is provided with light shield 150. As illustrated in FIG. 4, light shield 150 is located on a virtual line connecting an upper end of display surface 111 of display device 110 and an end of the vehicle forward (i.e., an end on the left-hand side of the figure) of second mirror 122.
This prevents stray light caused by a light beam emitted from display surface 111 of display device 110 being directly incident on second mirror 122 without being reflected by first mirror 121.

[1-2 Effects]

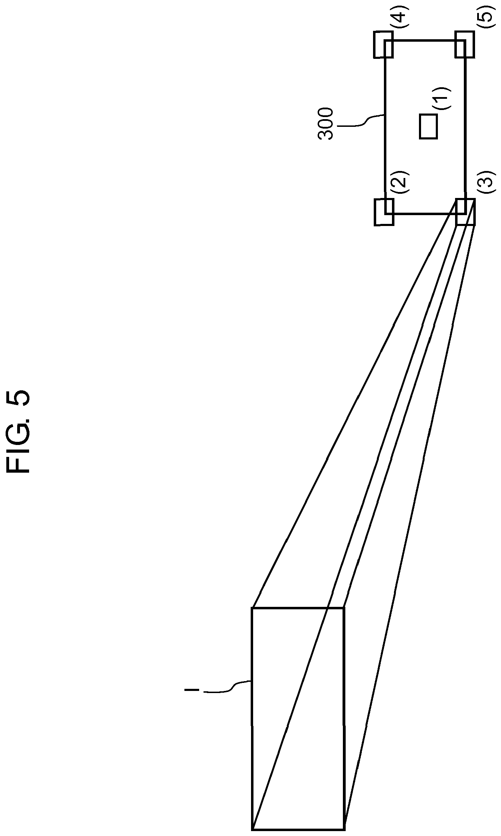

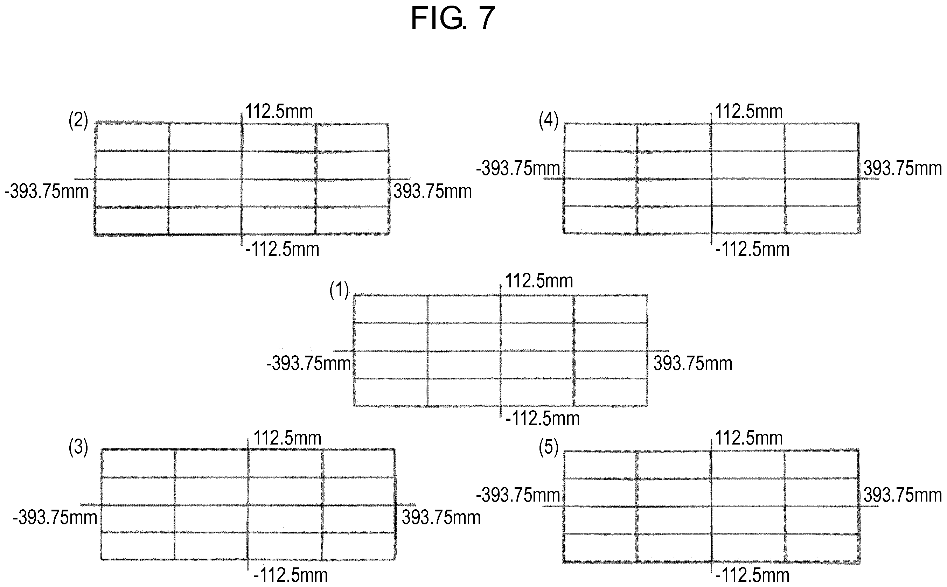

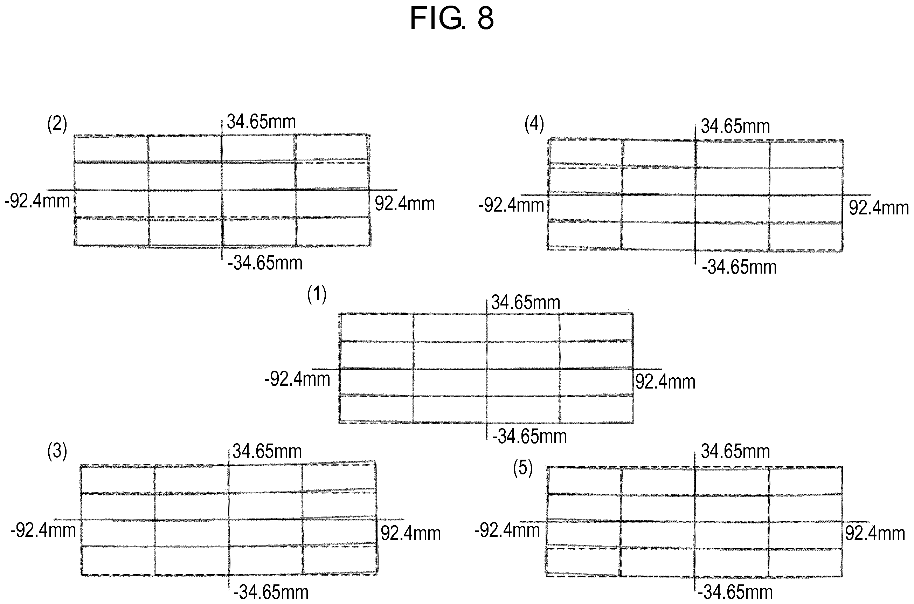

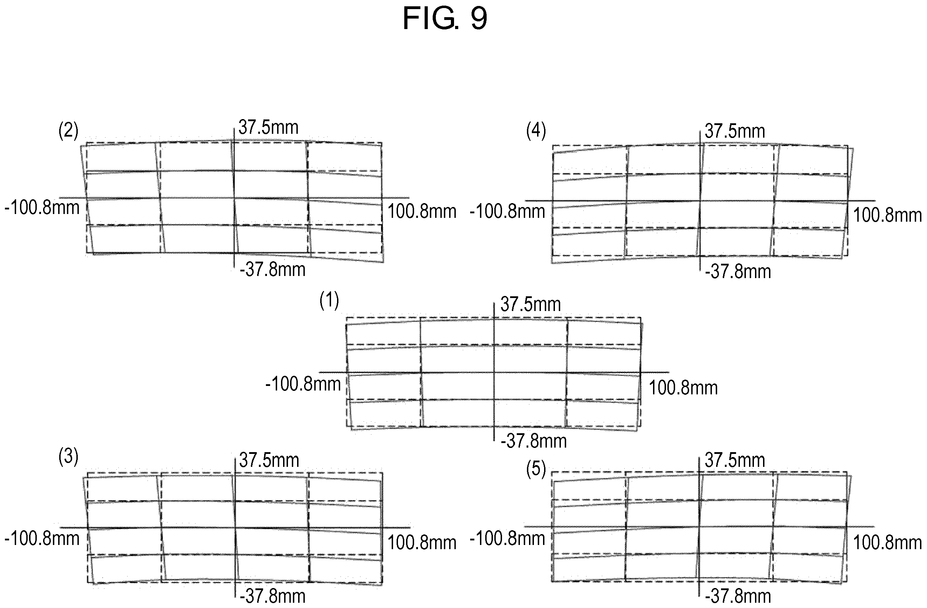

The effects of head-up display 100 configured as above are described below with reference to FIGS. 5 to 9.
FIG. 5 is a schematic diagram illustrating virtual image I viewed from viewing area 300 for observer D. In head-up display 100 according to the first exemplary embodiment, viewing area 300 is a rectangle having a width of 130 mm and a height of 40 mm.

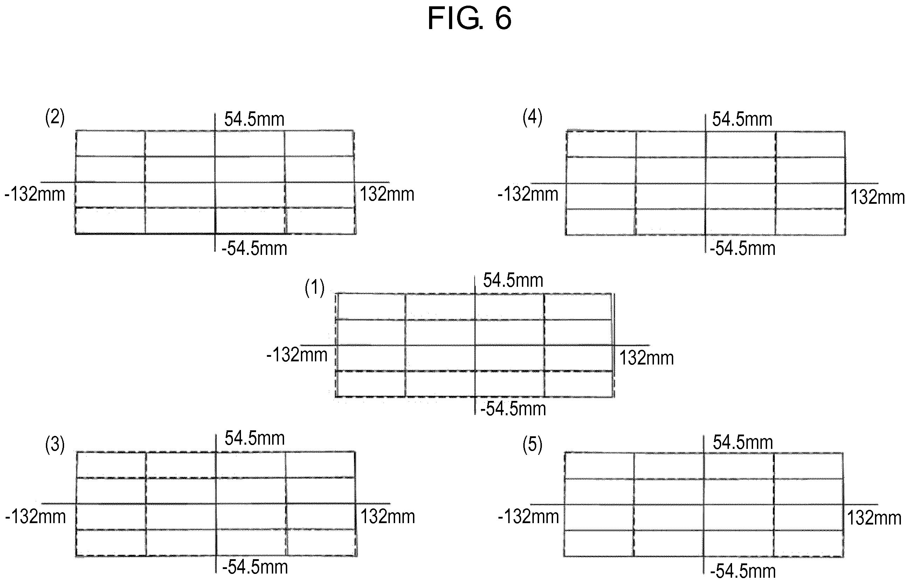

FIGS. 6 to 9 are diagrams representing image distortion in viewing area 300 for observer D. Solid lines of FIGS. 6 to 9 indicate virtual images I projected by head-up display 100 in Numerical Examples 1 to 4. Dashed lines indicate ideal shapes of virtual image I when viewed from viewing area 300.
In each of FIGS. 6 to 9, (1) shows image distortion when virtual image I is viewed from the center position of viewing area 300, as viewed from observer D, (2) shows image distortion when virtual image I is viewed from the upper left position of viewing area 300, (3) shows image distortion when virtual image I is viewed from the lower left position of viewing area 300, (4) shows image distortion when virtual image I is viewed from the upper right position of viewing area 300, and (5) shows image distortion when virtual image I is viewed from the lower right position of viewing area 300.
The use of head-up display 100 according to the present disclosure properly corrects image distortion over entire viewing area 300. That is, observer D can view good virtual image I from any position in viewing area 300.
Additionally, an image displayed on display surface 111 of display device 110 may be electronically pre-distorted in order to view better virtual image I.

[1-3 Preferable conditions]

Preferable conditions to be satisfied by head-up display 100 according to the first exemplary embodiment are described below. Note that a plurality of preferable conditions are defined for head-up display 100, and a configuration that satisfies all the plurality of conditions is most preferable. By satisfying each of individual conditions, however, head-up display 100 that provides each of the respective corresponding effects can be obtained.
Head-up display 100 according to the first exemplary embodiment includes display device 110 for displaying an image and a projection optical system 120 for projecting the image displayed on display device 110. Projection optical system 120 includes first mirror 121 and second mirror 122 in order along an optical path from display device 110.
Head-up display 100 according to the first exemplary embodiment projects an image displayed on display surface 111 of display device 110 onto windshield 220 and allows observer D to view virtual image I. This allows observer D to view the image displayed on display surface 111 of display device 110 without obstructing the forward view of observer D.
In head-up display 100 according to the present disclosure, reflective surface 121a of first mirror 121 preferably has a free-form surface shape. This properly corrects image distortion occurring in windshield 220 and allows for viewing good virtual image I less distorted over entire viewing area 300.
In head-up display 100 according to the present disclosure, reflective surface 122a of second mirror 122 preferably has a free-form surface shape. This properly corrects image distortion occurring in windshield 220 and allows for viewing good virtual image I less distorted over entire viewing area 300.
In head-up display 100 according to the present disclosure, reflective surface 121a of first mirror 121 has a concave shape. This prevents distortion of virtual image I caused by reflection as compared to the case where reflective surface 121a of first mirror 121 has a convex shape.
In head-up display 100 according to the present disclosure, reflective surface 122a of second mirror 122 has a concave shape or a planar shape. This prevents distortion of virtual image I caused by reflection as compared to the case where second mirror 122 has a convex shape.
In head-up display 100 according to the present disclosure, the contour of first mirror 121 is a trapezoid shape. This eliminates unnecessary area of first mirror 121 other than an area on which the image displayed on display surface 111 is reflected, and thus makes head-up display 100 smaller. The contour of first mirror 121 is not limited to a trapezoid shape, and the contour can be suitably changed according to the shape of an effective area.

Preferably, head-up display 100 according to the present disclosure satisfies the following condition (1):

$$1.7 < DL1/DL2 \quad ... (1)$$

where

DL1 is an optical path length of reference light beam Lc between display device 110 and first mirror 121 (strictly speaking, optical path length of reference light beam Lc between display surface 111 of display device 110 and reflective surface 121a of first mirror 121), and

DL2 is an optical path length of reference light beam Lc between first mirror 121 and second mirror 122 (strictly speaking, optical path length of reference light beam Lc between reflective surface 121a of first mirror 121 and reflective surface 122a of second mirror 122).

Condition (1) defines the ratio of a distance between display device 110 and first mirror 121 to a distance between first mirror 121 and second mirror 122. When condition (1) is satisfied, the distortion of virtual image I is more easily corrected. Accordingly, head-up display 100 with low distortion over entire viewing area 300 for observer D can be provided. When the ratio is below the lower limit of condition (1), the distance between display device 110 and first mirror 121 is smaller, so that the curvature of the concave surface of first mirror 121 needs to be increased and correcting the distortion of virtual image I is difficult. Furthermore, a smaller distance between display device 110 and first mirror 121 reduces the effect of light shield 150 and it is difficult to prevent stray light.

In addition, the satisfaction of the following condition (1A) further increases the above effect.

$$1.7 < DL1/DL2 < 4.0 \quad ... (1A)$$

When the ratio is above the upper limit value of condition (1A), the distance between display device 110 and first mirror 121 becomes greater, so that it is difficult to provide a compact head-up display.

In addition, the satisfaction of the following condition (1B) further increases the effect described above.

$$1.7 < DL1/DL2 < 3.0 \quad ... (1B)$$

Preferably, head-up display 100 according to the first exemplary embodiment satisfies the following condition (2):

$$5 < IL < 25 \quad ... (2)$$

where

IL is an emission angle (degrees) of reference light beam Lc emitted from display device 110.

Condition (2) defines the emission angle of reference light beam Lc emitted from display surface 111 of display device 110. When the emission angle is below the lower limit of condition (2), it is difficult to prevent external light, such as sunlight, from becoming stray light that reaches the eyes of observer D. The stray light is light caused by the external light, such as sunlight, being sequentially reflected by second mirror 122, first mirror 121, display surface 111 of display device 110, first mirror 121, second mirror 122, and windshield 220. When the emission angle is above the upper limit of condition (2), the contrast of the image displayed on display surface 111 is reduced and, thus, performance in viewing virtual image I is degraded.

Preferably, head-up display 100 according to the first exemplary embodiment satisfies the following condition (3):

$$25 < I2 < 45 \quad ... (3)$$

where

I2 is an angle of incidence (degrees) of reference light beam Lc incident on second mirror 122.

Condition (3) defines the angle of incidence of reference light beam Lc incident on second mirror 122 from first mirror 121. When the angle of incidence is below the lower limit of condition (3), the distance between first mirror 121 and second mirror 122 is increased and the depth dimension of housing 140 is increased. When the angle of incidence is above the upper limit of condition (3), it is difficult to correct asymmetric distortion occurring in second mirror 122.

In head-up display 100 according to the first exemplary embodiment, the upper end of light shield 150 is preferably located above a straight line connecting second mirror 122 and the image displayed on display surface 111. This prevents stray light caused by the image displayed on display surface 111 being directly incident on second mirror 122 without being reflected by the first mirror.

SECOND EXEMPLARY EMBODIMENT

A second exemplary embodiment is described below. Components similar to those of the first exemplary embodiment are denoted by the same reference numerals, and configurations and functions similar to those of the first exemplary embodiment may not be described in detail.

[2-1 Configuration]

[2-1-1 Overall configuration of head-up display]

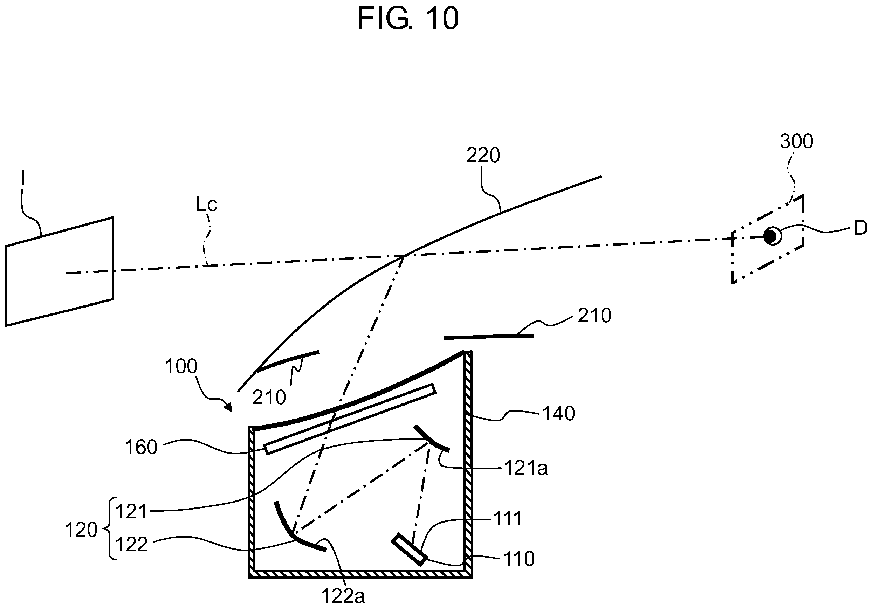

FIG. 10 is a schematic diagram illustrating head-up display 100 according to a second exemplary embodiment. As illustrated in FIG. 10, head-up display 100 is disposed in dashboard 210 located below windshield 220. Projection optical system 120 includes first mirror 121 and second mirror 122. An image displayed on display surface 111 of display device 110 is reflected by first mirror 121, then reflected by second mirror 122, refracted through refractive optical system 160, and further reflected by windshield 220. Thereafter, the image reaches viewing area 300 for observer D and is viewed as virtual image I by observer D.

[2-1-2 Arrangement configuration of projection optical system and display device]

Display device 110 is disposed below first mirror 121 in housing 140. Display surface 111 of display device 110 is directed toward first mirror 121. Here, display device 110 is preferably disposed such that reference light beam Lc emitted from display surface 111 is inclined with respect to display surface 111. This prevents stray light caused by external light entering housing 140 and being reflected on display surface 111 of display device 110.

Reflective surface 121a of first mirror 121 is oriented in a direction where an image, displayed on display surface 111, is reflected toward second mirror 122. Reflective surface 121a of first mirror 121 is also eccentric where an image, displayed on display surface 111, is reflected toward second mirror 122.

Here, a reflective area of second mirror 122 is greater than a reflective area of first mirror 121 in order to magnify the image displayed on display surface 111 and to display the image as virtual image I. The reflective area is the area of a mirror to reflect incident light, and as the reflective area is greater, the mirror becomes larger.

Second mirror 122 is disposed horizontally vehicle forward of first mirror 121 in housing 140. Reflective surface 122a of second mirror 122 is oriented in the direction in which reflective light from first mirror 121 is incident on windshield 220. Reflective surface 122a of second mirror 122 is also eccentric so that the reflective light from first mirror 121 is incident on windshield 220.

First mirror 121 is a mirror whose reflective surface 121a has a convex shape and a free-form surface shape. Second mirror 122 is a mirror whose reflective surface 122a has a concave shape and a free-form surface shape. Concave reflective surface 122a of second mirror 122 can properly correct image distortion (i.e., image distortion in which the image displayed on display surface 111 is asymmetrically and eccentrically distorted) occurring in first mirror 121. Concave reflective surface 122a of second mirror 122 allows observer D to view virtual image I magnified as compared to the image displayed on display surface 111. Alternatively, the reflective surface of one of first mirror 121 and second mirror 122 may have a free-form surface shape, and the reflective surface of the other may have a planar shape.

Additionally, convex reflective surface 121a of first mirror 121 can increase concave surface power of second mirror 122, which makes housing 140 smaller.

First mirror 121 uses a free-form surface shape as reflective surface 121a. This is to correct the distortion of virtual image I caused by reflection and to allow for viewing good virtual image I over entire viewing area 300.

Second mirror 122 uses a free-form surface shape as reflective surface 122a. This is to correct the distortion of virtual image I caused by reflection and to allow for viewing good virtual image I over entire viewing area 300.

THIRD EXEMPLARY EMBODIMENT

A third exemplary embodiment is described below. Components similar to those of the above exemplary embodiments are denoted by the same reference numerals, and configurations and functions similar to those of the above exemplary embodiments may not be described in detail.

[3-1 Configuration]

[3-1-1 Overall configuration of head-up display]

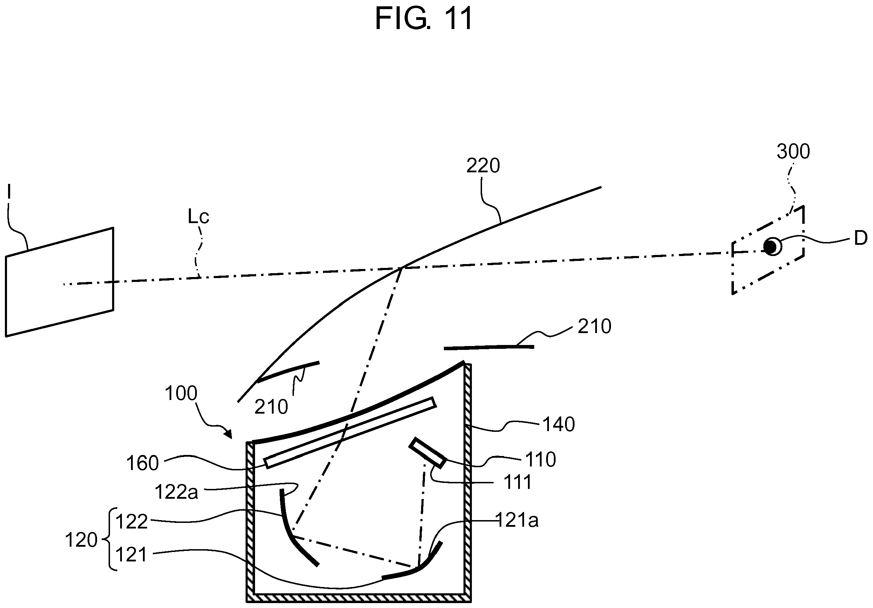

FIG. 11 is a schematic diagram illustrating head-up display 100 according to a third exemplary embodiment.
As illustrated in FIG. 11, head-up display 100 is disposed in dashboard 210 located below windshield 220. Projection optical system 120 includes first mirror 121 and second mirror 122. An image displayed on display surface 111 of display device 110 is reflected by first mirror 121, then reflected by second mirror 122, refracted through refractive optical system 160, and further reflected by windshield 220. Thereafter, the image reaches viewing area 300 for observer D and is viewed as virtual image I by observer D.

[3-1-2 Arrangement configuration of projection optical system and display device]

Display device 110 is disposed above first mirror 121 in housing 140. Display surface 111 of display device 110 is directed toward first mirror 121. This prevents display surface 111 (liquid crystal surface) of display device 110 from being exposed to sunlight. Here, display device 110 is preferably disposed such that reference light beam Lc emitted from display surface 111 is inclined with respect to display surface 111. This prevents stray light caused by external light entering housing 140 and being reflected on display surface 111 of display device 110.
Reflective surface 121a of first mirror 121 is oriented in a direction where an image, displayed on display surface 111, is reflected toward second mirror 122. Reflective surface 121a of first mirror 121 is also eccentric where an image, displayed on display surface 111, is reflected toward second mirror 122.
Here, a reflective area of second mirror 122 is greater than a reflective area of first mirror 121 in order to magnify the image displayed on display surface 111 and to display the image as virtual image I. The reflective area is the area of a mirror to reflect incident light, and as the reflective area is greater, the mirror becomes larger.
Second mirror 122 is disposed horizontally vehicle forward of first mirror 121 in housing 140. Reflective surface 122a of second mirror 122 is oriented in the direction in which reflective light from first mirror 121 is incident on windshield 220. Reflective surface 122a of second mirror 122 is also eccentric so that the reflective light from first mirror 121 is incident on windshield 220.
First mirror 121 is a mirror whose reflective surface 121a has a concave shape and a free-form surface shape. Second mirror 122 is a mirror whose reflective surface 122a has a concave shape and a free-form surface shape. Concave reflective surface 121a of first mirror 121 can properly correct image distortion (i.e., image distortion in which the image displayed on display surface 111 is asymmetrically and eccentrically distorted) occurring in second mirror 122. Concave reflective surface 122a of second mirror 122 allows observer D to view virtual image I magnified as compared to the image displayed on display surface 111. Alternatively, the reflective surface of one of first mirror 121 and second mirror 122 may have a free-form surface shape, and the reflective surface of the other may have a planar shape. Otherwise, the reflective surface of one of first mirror 121 and second mirror 122 may have a concave shape, and the reflective surface of the other may have a convex shape.
Additionally, concave reflective surfaces 121a, 122a of first mirror 121 and second mirror 122 can distribute power owned by a single mirror, thereby reducing distortion sensitivity in assembling.
First mirror 121 uses a free-form surface shape as reflective surface 121a. This is to correct the distortion of virtual image I caused by reflection and to allow for viewing good virtual image I over entire viewing area 300.
Second mirror 122 uses a free-form surface shape as reflective surface 122a. This is to correct the distortion of virtual image I caused by reflection and to allow for viewing good virtual image I over entire viewing area 300.

FOURTH EXEMPLARY EMBODIMENT

A fourth exemplary embodiment is described below. Components similar to those of the above exemplary embodiments are denoted by the same reference numerals, and configurations and functions similar to those of the above exemplary embodiments may not be described in detail.

[4-1 Configuration]

[4-1-1 Overall configuration of head-up display]

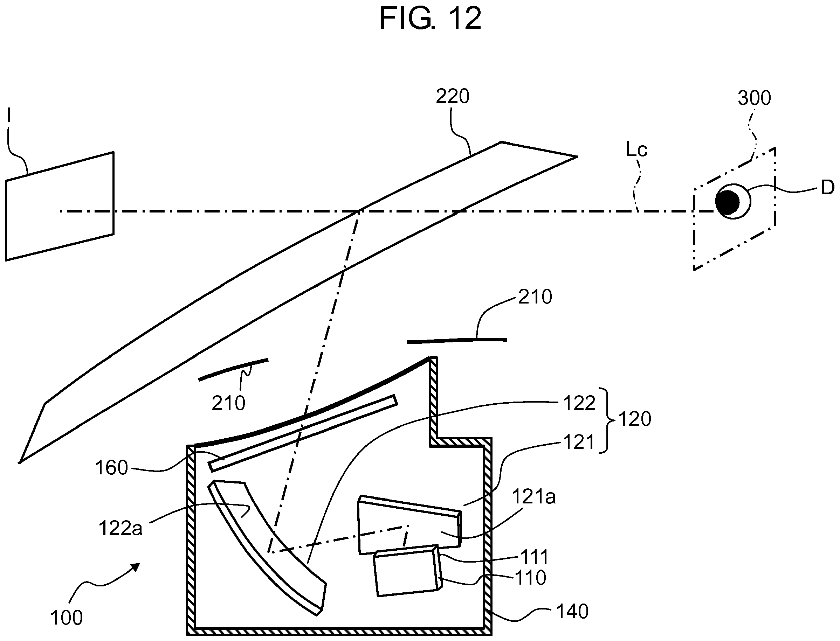

FIG. 12 is a schematic diagram illustrating head-up display 100 according to a fourth exemplary embodiment, where part of FIG. 12 is a projection view for the sake of simplicity.

As illustrated in FIG. 12, head-up display 100 is disposed in dashboard 210 located below windshield 220. Projection optical system 120 includes first mirror 121 and second mirror 122. An image displayed on display surface 111 of display device 110 is reflected by first mirror 121, then reflected by second mirror 122, refracted through refractive optical system 160, and further reflected by windshield 220. Thereafter, the image reaches viewing area 300 for observer D and is viewed as virtual image I by observer D.

[4-1-2 Arrangement configuration of projection optical system and display device]

Display device 110, first mirror 121, and second mirror 122 are disposed such that at least respective parts of display device 110, first mirror 121, and second mirror 122 are in the same horizontal plane.

Display surface 111 of display device 110 is directed toward first mirror 121. This prevents display surface 111 (liquid crystal surface) from being exposed to sunlight. Here, display surface 111 of display device 110 is preferably disposed such that reference light beam Lc emitted from display surface 111 is inclined with respect to display surface 111. This prevents stray light caused by external light entering housing 140 and being reflected on display surface 111 of display device 110.

Reflective surface 121a of first mirror 121 is oriented in a direction where an image, displayed on display surface 111, is reflected toward second mirror 122. Reflective surface 121a of first mirror 121 is also eccentric where an image, displayed on display surface 111, is reflected toward second mirror 122.

Here, a reflective area of second mirror 122 is greater than a reflective area of first mirror 121 in order to magnify the image to be displayed on display surface 111 and to display the image as virtual image I. The reflective area is the area of a mirror to reflect incident light, and as the reflective area is greater, the mirror becomes larger.

Second mirror 122 is disposed horizontally vehicle forward of first mirror 121 in housing 140. Reflective surface 122a of second mirror 122 is oriented in the direction in which reflective light from first mirror 121 is incident on windshield 220. Reflective surface 122a of second mirror 122 is also eccentric so that the reflective light from first mirror 121 is incident on windshield 220.

First mirror 121 is a mirror whose reflective surface 121a has a convex shape and a free-form surface shape. Second mirror 122 is a mirror whose reflective surface 122a has a concave shape and a free-form surface shape. Concave reflective surface 122a of second mirror 122 can properly correct image distortion (i.e., image distortion in which the image displayed on display surface 111 is asymmetrically and eccentrically distorted) occurring in first mirror 121. Concave reflective surface 122a of second mirror 122 allows observer D to view virtual image I magnified as compared to the image displayed on display surface 111. Alternatively, the reflective surface of one of first mirror 121 and second mirror 122 may have a free-form surface shape, and the reflective surface of the other may have a planar shape.

Additionally, convex reflective surface 121a of first mirror 121 can increase concave surface power of second mirror 122, which makes housing 140 smaller.

First mirror 121 uses a free-form surface shape as reflective surface 121a. This is to correct the distortion of virtual image I caused by reflection and to allow for viewing good virtual image I over entire viewing area 300.

Second mirror 122 uses a free-form surface shape as reflective surface 122a. This is to correct the distortion of virtual image I caused by reflection and to allow for viewing good virtual image I over entire viewing area 300.

OTHER EXEMPLARY EMBODIMENTS

As noted above, the first to fourth embodiments have been described as examples of the technique disclosed herein. However, the technique according to the present disclosure is not limited thereto and is applicable to embodiments in which modifications, substitutions, additions, omissions, etc., are made. Another embodiment could be achieved by combining the components described in the first to fourth embodiments.

NUMERICAL EXAMPLES

Numerical Examples 1 to 4, which embody the head-up displays according to the first to fourth embodiments, are described below. In tables of Numerical Examples 1 to 4, all lengths are in "mm" (millimeters) and all angles are in "°" (degrees). In the numerical examples, a free-form surface is defined by the following equations:

[Equation 1]

$$z = \frac{cr^2}{1 + \sqrt{1 - (1+k)c^2 r^2}} + \sum_{m,n} C_j x^m y^n \quad \left( m \geq 0, n \geq 0, m + n > 0 \right)$$

[Equation 2]

$$j = \frac{(m+n)^2 + m + 3n}{2} + 1$$

Here, z is a sag at a position with coordinates (x, y) of axes defining a surface, r is a radius of curvature at the origin of the axes defining the surface, c is a curvature at the origin of the axes defining the surface, and k is a conic constant corresponding to polynomial coefficient $C_1$. Cj (j > 1) is a coefficient of monomial expression $x^m y^n$, where m and n are integers greater than or equal to zero.

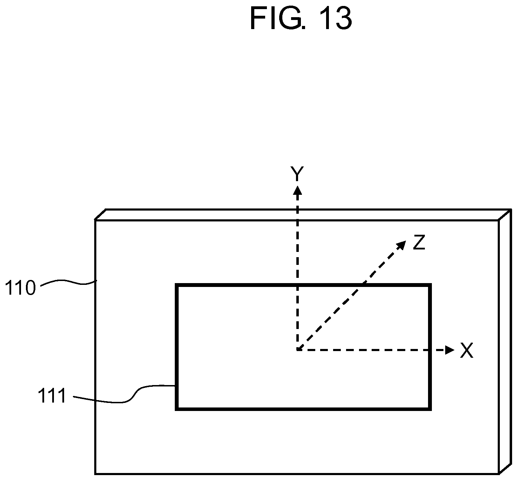

FIG. 13 is a diagram illustrating the coordinate system of Numerical Examples 1 to 4 according to the first exemplary embodiment. In Numerical Examples 1 to 4, a reference coordinate origin is the center of an image displayed on display surface 111, defining X, Y, Z axes as illustrated in FIG. 13.

Additionally, in eccentricity data in Numerical Examples 1 to 4, ADE refers to the amount by which a mirror is rotated about the X-axis from the Z-axis direction to the Y-axis direction. BDE refers to the amount by which a mirror is rotated about the Y-axis from the X-axis direction to the Z-axis direction. CDE refers to the amount by which a mirror is rotated about the Z-axis from the X-axis direction to the Y-axis direction.

NUMERICAL EXAMPLE 1

Table 1 shows configuration data of projection optical system 120 of Numerical Example 1, and Table 2 shows coefficients of polynomial free-form surfaces.

[Table 1]

|  | Surface No. | Shape | Eccentricity Data | | | | | |
|---|---|---|---|---|---|---|---|---|
|  |  |  | X | Y | Z | ADE | BDE | CDE |
| Display Surface | 1 |  | 0 | 0 | 0 | 0 | 0 | 0 |
| First Mirror | 2 | Free-form Surface | -0.245 | -19.308 | 109.501 | -31.976 | 1.188 | -2.606 |
| Second Mirror | 3 | Free-form Surface | 1.568 | 21.100 | 80.108 | -87.291 | 2.819 | -0.506 |
| Windshield | 4 | Toroidal | -11.005 | -216.499 | -63.803 | -54.413 | -3.034 | -0.736 |
| Observer | 5 |  | -81.869 | -384.158 | -841.435 | 13.847 | -4.800 | 9.924 |

| Surface No. | Radius of Curvature |
|---|---|
| 2 | -590.2 |
| 3 | 4668.5 |

(continued)

| Surface No. | X Radius of Curvature | Y Radius of Curvature | |
|---|---|---|---|
| 4 | -2600 | -4300 | |

[Table 2]

| Surface No. | Polynomial Coefficient | | | | | | | |
|---|---|---|---|---|---|---|---|---|
| 2 | C1 | 0.00000E+00 | C19 | 0.00000E+00 | C37 | 0.00000E+00 | C55 | 0.00000E+00 |
| | C2 | 0.00000E+00 | C20 | 0.00000E+00 | C38 | 0.00000E+00 | C56 | 0.00000E+00 |
| | C3 | 0.00000E+00 | C21 | 0.00000E+00 | C39 | 0.00000E+00 | C57 | 0.00000E+00 |
| | C4 | -2.85570E-04 | C22 | 0.00000E+00 | C40 | 0.00000E+00 | C58 | 0.00000E+00 |
| | C5 | 3.15214E-05 | C23 | 0.00000E+00 | C41 | 0.00000E+00 | C59 | 0.00000E+00 |
| | C6 | -4.93034E-04 | C24 | 0.00000E+00 | C42 | 0.00000E+00 | C60 | 0.00000E+00 |
| | C7 | 2.25126E-07 | C25 | 0.00000E+00 | C43 | 0.00000E+00 | C61 | 0.00000E+00 |
| | C8 | 3.32820E-06 | C26 | 0.00000E+00 | C44 | 0.00000E+00 | C62 | 0.00000E+00 |
| | C9 | 1.93874E-06 | C27 | 0.00000E+00 | C45 | 0.00000E+00 | C63 | 0.00000E+00 |
| | C10 | 7.26124E-06 | C28 | 0.00000E+00 | C46 | 0.00000E+00 | C64 | 0.00000E+00 |
| | C11 | 6.88841E-10 | C29 | 0.00000E+00 | C47 | 0.00000E+00 | C65 | 0.00000E+00 |
| | C12 | 2.24171E-09 | C30 | 0.00000E+00 | C48 | 0.00000E+00 | C66 | 0.00000E+00 |
| | C13 | -1.46605E-08 | C31 | 0.00000E+00 | C49 | 0.00000E+00 | | |
| | C14 | -5.89482E-09 | C32 | 0.00000E+00 | C50 | 0.00000E+00 | | |
| | C15 | 1.41124E-08 | C33 | 0.00000E+00 | C51 | 0.00000E+00 | | |
| | C16 | 0.00000E+00 | C34 | 0.00000E+00 | C52 | 0.00000E+00 | | |
| | C17 | 0.00000E+00 | C35 | 0.00000E+00 | C53 | 0.00000E+00 | | |
| | C18 | 0.00000E+00 | C36 | 0.00000E+00 | C54 | 0.00000E+00 | | |

(continued)

| Surface No. | | Polynomial Coefficient | | | | | | |
|---|---|---|---|---|---|---|---|---|
| 3 | C1 | 0.00000E+00 | C19 | 0.00000E+00 | C37 | 0.00000E+00 | C55 | 0.00000E+00 |
| | C2 | 0.00000E+00 | C20 | 0.00000E+00 | C38 | 0.00000E+00 | C56 | 0.00000E+00 |
| | C3 | 0.00000E+00 | C21 | 0.00000E+00 | C39 | 0.00000E+00 | C57 | 0.00000E+00 |
| | C4 | 5.31441E-04 | C22 | 0.00000E+00 | C40 | 0.00000E+00 | C58 | 0.00000E+00 |
| | C5 | -5.00228E-05 | C23 | 0.00000E+00 | C41 | 0.00000E+00 | C59 | 0.00000E+00 |
| | C6 | -1.91333E-04 | C24 | 0.00000E+00 | C42 | 0.00000E+00 | C60 | 0.00000E+00 |
| | C7 | 1.34339E-07 | C25 | 0.00000E+00 | C43 | 0.00000E+00 | C61 | 0.00000E+00 |
| | C8 | 6.12266E-07 | C26 | 0.00000E+00 | C44 | 0.00000E+00 | C62 | 0.00000E+00 |
| | C9 | 1.58718E-06 | C27 | 0.00000E+00 | C45 | 0.00000E+00 | C63 | 0.00000E+00 |
| | C10 | 3.51226E-06 | C28 | 0.00000E+00 | C46 | 0.00000E+00 | C64 | 0.00000E+00 |
| | C11 | -4.49786E-10 | C29 | 0.00000E+00 | C47 | 0.00000E+00 | C65 | 0.00000E+00 |
| | C12 | 2.52165E-09 | C30 | 0.00000E+00 | C48 | 0.00000E+00 | C66 | 0.00000E+00 |
| | C13 | -2.24280E-09 | C31 | 0.00000E+00 | C49 | 0.00000E+00 | | |
| | C14 | -1.74921E-09 | C32 | 0.00000E+00 | C50 | 0.00000E+00 | | |
| | C15 | 2.08500E-08 | C33 | 0.00000E+00 | C51 | 0.00000E+00 | | |
| | C16 | 0.00000E+00 | C34 | 0.00000E+00 | C52 | 0.00000E+00 | | |
| | C17 | 0.00000E+00 | C35 | 0.00000E+00 | C53 | 0.00000E+00 | | |
| | C18 | 0.00000E+00 | C36 | 0.00000E+00 | C54 | 0.00000E+00 | | |

NUMERICAL EXAMPLE 2

Table 3 shows configuration data of projection optical system 120 of Numerical Example 2, and Table 4 shows coefficients of polynomial free-form surfaces.

[Table 3]

| | Surface No. | Shape | Eccentricity Data | | | | | |
|---|---|---|---|---|---|---|---|---|
| | | | X | Y | Z | ADE | BDE | CDE |
| Display Surface | 1 | | 0 | 0 | 0 | 0 | 0 | 0 |
| First Mirror | 2 | Free-form Surface | 21.690 | -47.566 | 135.249 | -44.294 | -14.947 | -11.590 |
| Second Mirror | 3 | Free-form Surface | -0.517 | 14.952 | 112.929 | -96.251 | -1.101 | -17.399 |
| Windshield | 4 | Toroidal | -91.155 | -291.389 | -34.731 | -62.272 | -13.415 | -21.310 |
| Observer | 5 | | -464.001 | -388.504 | -734.301 | 8.124 | -27.788 | 11.988 |

| Surface No. | Radius of Curvature |
|---|---|
| 2 | 930.7 |
| 3 | 561.7 |

(continued)

| Surface No. | X Radius of Curvature | Y Radius of Curvature | |
|---|---|---|---|
| 4 | -2600 | -4300 | |

[Table 4]

| Surface No. | Polynomial Coefficient | | | | | | | |
|---|---|---|---|---|---|---|---|---|
| 2 | C1 | 0.00000E+00 | C19 | 3.43537E-10 | C37 | 0.00000E+00 | C55 | 0.00000E+00 |
| | C2 | 0.00000E+00 | C20 | 2.54005E-10 | C38 | 0.00000E+00 | C56 | 0.00000E+00 |
| | C3 | 0.00000E+00 | C21 | -9.54203E-10 | C39 | 0.00000E+00 | C57 | 0.00000E+00 |
| | C4 | -1.24217E-03 | C22 | -7.07046E-14 | C40 | 0.00000E+00 | C58 | 0.00000E+00 |
| | C5 | 4.70706E-04 | C23 | 1.33665E-13 | C41 | 0.00000E+00 | C59 | 0.00000E+00 |
| | E- | -1.44271E-03 | C24 | -9.79282E-14 | C42 | 0.00000E+00 | C60 | 0.00000E+00 |
| | C7 | 3.07575E-07 | C25 | 1.04540E-12 | C43 | 0.00000E+00 | C61 | 0.00000E+00 |
| | C8 | 2.38044E-06 | C26 | 1.20102E-12 | C44 | 0.00000E+00 | C62 | 0.00000E+00 |
| | C9 | 3.05234E-06 | C27 | 2.50124E-12 | C45 | 0.00000E+00 | C63 | 0.00000E+00 |
| | C10 | 4.58830E-06 | C28 | 4.59976E-12 | C46 | 0.00000E+00 | C64 | 0.00000E+00 |
| | C11 | -2.73828E-10 | C29 | 0.00000E+00 | C47 | 0.00000E+00 | C65 | 0.00000E+00 |
| | C12 | 1.76566E-08 | C30 | 0.00000E+00 | C48 | 0.00000E+00 | C66 | 0.00000E+00 |
| | C13 | 7.43442E-09 | C31 | 0.00000E+00 | C49 | 0.00000E+00 | | |
| | C14 | 4.87738E-08 | C32 | 0.00000E+00 | C50 | 0.00000E+00 | | |
| | C15 | -3.10039E-08 | C33 | 0.00000E+00 | C51 | 0.00000E+00 | | |
| | C16 | 6.57075E-13 | C34 | 0.00000E+00 | C52 | 0.00000E+00 | | |
| | C17 | 1.19867E-10 | C35 | 0.00000E+00 | C53 | 0.00000E+00 | | |
| | C18 | 1.54768E-10 | C36 | 0.00000E+00 | C54 | 0.00000E+00 | | |

(continued)

| Surface No. | Polynomial Coefficient | | | | | | | |
|---|---|---|---|---|---|---|---|---|
| 3 | C1 | 0.00000E+00 | C19 | 1.05993E-10 | C37 | 0.00000E+00 | C55 | 0.00000E+00 |
| | C2 | 0.00000E+00 | C20 | 3.33553E-10 | C38 | 0.00000E+00 | C56 | 0.00000E+00 |
| | C3 | 0.00000E+00 | C21 | -6.20298E-10 | C39 | 0.00000E+00 | C57 | 0.00000E+00 |
| | C4 | -3.23639E-04 | C22 | -9.41644E-14 | C40 | 0.00000E+00 | C58 | 0.00000E+00 |
| | C5 | 2.18328E-04 | C23 | 7.00912E-14 | C41 | 0.00000E+00 | C59 | 0.00000E+00 |
| | C6 | -9.38574E-04 | C24 | -4.99953E-15 | C42 | 0.00000E+00 | C60 | 0.00000E+00 |
| | C7 | 6.74843E-07 | C25 | 3.23238E-13 | C43 | 0.00000E+00 | C61 | 0.00000E+00 |
| | C8 | -4.20886E-08 | C26 | 1.21274E-12 | C44 | 0.00000E+00 | C62 | 0.00000E+00 |
| | C9 | 2.92925E-06 | C27 | 2.74584E-12 | C45 | 0.00000E+00 | C63 | 0.00000E+00 |
| | C10 | 1.37410E-06 | C28 | 8.98291E-13 | C46 | 0.00000E+00 | C64 | 0.00000E+00 |
| | C11 | -6.23358E-11 | C29 | 0.00000E+00 | C47 | 0.00000E+00 | C65 | 0.00000E+00 |
| | C12 | 8.94591E-09 | C30 | 0.00000E+00 | C48 | 0.00000E+00 | C66 | 0.00000E+00 |
| | C13 | -3.89638E-09 | C31 | 0.00000E+00 | C49 | 0.00000E+00 | | |
| | C14 | 3.56744E-08 | C32 | 0.00000E+00 | C50 | 0.00000E+00 | | |
| | C15 | -2.15222E-08 | C33 | 0.00000E+00 | C51 | 0.00000E+00 | | |
| | C16 | 3.27131E-12 | C34 | 0.00000E+00 | C52 | 0.00000E+00 | | |
| | C17 | 3.80313E-11 | C35 | 0.00000E+00 | C53 | 0.00000E+00 | | |
| | C18 | 6.11279E-11 | C36 | 0.00000E+00 | C54 | 0.00000E+00 | | |

NUMERICAL EXAMPLE 3

Table 5 shows configuration data of projection optical system 120 of Numerical Example 3, and Table 6 shows coefficients of a polynomial free-form surface.

[Table 5]

| | Surface No. | Shape | Eccentricity Data | | | | | |
|---|---|---|---|---|---|---|---|---|
| | | | X | Y | Z | ADE | BDE | CDE |
| Display Surface | 1 | | 0 | 0 | 0 | 0 | 0 | 0 |
| First Mirror | 2 | Free-form Surface | 0.000 | 38.823 | 144.889 | -4.000 | 0.904 | -1.802 |
| Second Mirror | 3 | Planar | 2.513 | 58.278 | 98.898 | -62.989 | 4.020 | -0.308 |
| Windshield | 4 | Toroidal | -13.700 | -221.632 | 31.084 | -36.775 | -1.433 | -0.734 |
| Observer | 5 | | -75.672 | -615.922 | -660.681 | 31.368 | -4.203 | 8.433 |

| Surface No. | Radius of Curvature |
|---|---|
| 2 | -525.1 |
| 3 | ∞ |

| Surface No. | X Radius of Curvature | Y Radius of Curvature |
|---|---|---|
| 4 | -2600 | -4300 |

[Table 6]

| Surface No. | Polynomial Coefficient | | | | | | | |
|---|---|---|---|---|---|---|---|---|
| | C1 | 0.00000E+00 | C19 | -1.99562E-10 | C37 | 0.00000E+00 | C55 | 0.00000E+00 |
| | C2 | 0.00000E+00 | C20 | 7.95802E-11 | C38 | 0.00000E+00 | C56 | 0.00000E+00 |
| | C3 | 0.00000E+00 | C21 | -2.95811E-09 | C39 | 0.00000E+00 | C57 | 0.00000E+00 |
| | C4 | -1.73944E-04 | C22 | 1.09857E-13 | C40 | 0.00000E+00 | C58 | 0.00000E+00 |
| | C5 | 1.26087E-04 | C23 | 1.71777E-14 | C41 | 0.00000E+00 | C59 | 0.00000E+00 |
| | C6 | 2.70038E-04 | C24 | -1.48989E-13 | C42 | 0.00000E+00 | C60 | 0.00000E+00 |
| | C7 | 4.49636E-08 | C25 | 3.24641E-12 | C43 | 0.00000E+00 | C61 | 0.00000E+00 |
| | C8 | 2.69334E-07 | C26 | 4.37750E-12 | C44 | 0.00000E+00 | C62 | 0.00000E+00 |
| | C9 | -1.91072E-07 | C27 | 2.50031E-11 | C45 | 0.00000E+00 | C63 | 0.00000E+00 |
| 2 | C10 | 1.80824E-06 | C28 | 6.28061E-11 | C46 | 0.00000E+00 | C64 | 0.00000E+00 |
| | C11 | -1.60538E-09 | C29 | 0.00000E+00 | C47 | 0.00000E+00 | C65 | 0.00000E+00 |
| | C12 | -1.66799E-09 | C30 | 0.00000E+00 | C48 | 0.00000E+00 | C66 | 0.00000E+00 |
| | C13 | -8.92884E-10 | C31 | 0.00000E+00 | C49 | 0.00000E+00 | | |
| | C14 | -2.66759E-08 | C32 | 0.00000E+00 | C50 | 0.00000E+00 | | |
| | C15 | -5.20157E-08 | C33 | 0.00000E+00 | C51 | 0.00000E+00 | | |
| | C16 | -3.70436E-12 | C34 | 0.00000E+00 | C52 | 0.00000E+00 | | |
| | C17 | 3.20147E-11 | C35 | 0.00000E+00 | C53 | 0.00000E+00 | | |
| | C18 | -3.00357E-11 | C36 | 0.00000E+00 | C54 | 0.00000E+00 | | |

NUMERICAL EXAMPLE 4

Table 7 shows configuration data of projection optical system 120 of Numerical Example 4, and Table 8 shows coefficients of a polynomial free-form surface.

[Table 7]

| | Surface No. | Shape | Eccentricity Data | | | | | |
|---|---|---|---|---|---|---|---|---|
| | | | X | Y | Z | ADE | BDE | CDE |
| Display Surface | 1 | | 0 | 0 | 0 | 0 | 0 | 0 |
| First Mirror | 2 | Planar | 0.000 | -54.940 | 117.820 | -53.179 | 1.619 | -3.018 |
| Second Mirror | 3 | Free-form Surface | 2.987 | 4.311 | 108.856 | -103.460 | 0.339 | -1.234 |
| Windshield | 4 | Toroidal | 14.270 | -228.689 | -60.835 | -58.993 | -7.294 | 2.717 |
| Observer | 5 | | -36.180 | -335.172 | -850.746 | 9.321 | -3.179 | 15.166 |

| Surface No. | Radius of Curvature |
|---|---|
| 2 | ∞ |
| 3 | 746.6 |
| | |

(continued)

| Surface No. | X Radius of Curvature | Y Radius of Curvature | |
|---|---|---|---|
| 4 | -2600 | -4300 | |

[Table 8]

| Surface No. | Polynomial Coefficient | | | | | | |
|---|---|---|---|---|---|---|---|
| | C1 | 0.00000E+00 | C19 | -1.99562E-10 | C37 | 0.00000E+00 | C55 | 0.00000E+00 |
| | C2 | 0.00000E+00 | C20 | 7.95802E-11 | C38 | 0.00000E+00 | C56 | 0.00000E+00 |
| | C3 | 0.00000E+00 | C21 | -2.95811E-09 | C39 | 0.00000E+00 | C57 | 0.00000E+00 |
| | C4 | -1.73944E-04 | C22 | 1.09857E-13 | C40 | 0.00000E+00 | C58 | 0.00000E+00 |
| | C5 | 1.26087E-04 | C23 | 1.71777E-14 | C41 | 0.00000E+00 | C59 | 0.00000E+00 |
| | C6 | 2.70038E-04 | C24 | -1.48989E-13 | C42 | 0.00000E+00 | C60 | 0.00000E+00 |
| | C7 | 4.49636E-08 | C25 | 3.24641E-12 | C43 | 0.00000E+00 | C61 | 0.00000E+00 |
| | C8 | 2.69334E-07 | C26 | 4.37750E-12 | C44 | 0.00000E+00 | C62 | 0.00000E+00 |
| 3 | C9 | -1.91072E-07 | C27 | 2.50031E-11 | C45 | 0.00000E+00 | C63 | 0.00000E+00 |
| | C10 | 1.80824E-06 | C28 | 6.28061E-11 | C46 | 0.00000E+00 | C64 | 0.00000E+00 |
| | C11 | -1.60538E-09 | C29 | 0.00000E+00 | C47 | 0.00000E+00 | C65 | 0.00000E+00 |
| | C12 | -1.66799E-09 | C30 | 0.00000E+00 | C48 | 0.00000E+00 | C66 | 0.00000E+00 |
| | C13 | -8.92884E-10 | C31 | 0.00000E+00 | C49 | 0.00000E+00 | | |
| | C14 | -2.66759E-08 | C32 | 0.00000E+00 | C50 | 0.00000E+00 | | |
| | C15 | -5.20157E-08 | C33 | 0.00000E+00 | C51 | 0.00000E+00 | | |
| | C16 | -3.70436E-12 | C34 | 0.00000E+00 | C52 | 0.00000E+00 | | |
| | C17 | 3.20147E-11 | C35 | 0.00000E+00 | C53 | 0.00000E+00 | | |
| | C18 | -3.00357E-11 | C36 | 0.00000E+00 | C54 | 0.00000E+00 | | |

Table 9 below indicates a size of an image displayed on display surface 111, a size of virtual image I, and a distance from the pupil of observer D to virtual image I in each of Numerical Examples 1 to 4.

[Table 9]

| | | Example 1 | Example 2 | Example 3 | Example 4 |
|---|---|---|---|---|---|
| Display Size | X | 40.9 | 69.4 | 40.9 | 40.9 |
| | Y | 15.3 | 19.8 | 15.3 | 15.3 |
| Virtual Image Size | X | 264.0 | 787.5 | 184.8 | 201.6 |
| | Y | 990. | 225.0 | 69.3 | 75.6 |
| Distance from Observer to Virtual Image | | 2200.0 | 4500.0 | 2200.0 | 2400.0 |

Table 10 below shows numerical values under conditions (1) to (3) in Numerical Examples 1 to 4.

[Table 10]

| | Example 1 | Example 2 | Example 3 | Example 4 |
|---|---|---|---|---|
| Condition (1) | 2.22 | 2.08 | 3.00 | 2.17 |

(continued)

|  | Example 1 | Example 2 | Example 3 | Example 4 |
|---|---|---|---|---|
| Condition (2) | 10.00 | 21.13 | 15.00 | 25.00 |
| Condition (3) | 33.30 | 30.79 | 39.97 | 22.20 |

Table 11 below indicates sags of first mirror 121 in Numerical Examples 1 to 3, where a distance from reference intersection line Bc indicates vertically upper side when the distance is positive, and the distance indicates vertically lower side when the distance is negative.

[Table 11]

| Distance from Reference Intersection Point | Sag | | | | | | | |
|---|---|---|---|---|---|---|---|---|
|  | -40 | -30 | -20 | -10 | 10 | 20 | 30 | 40 |
| Example 1 | 1.645 | 0.999 | 0.476 | 0.127 | 0.141 | 0.592 | 1.391 | 2.574 |
| Example 2 | 1.636 | 0.906 | 0.403 | 0.102 | 0.108 | 0.444 | 1.028 | 1.865 |
| Example 3 | - | - | 0.272 | 0.067 | 0.070 | 0.282 | - | - |

INDUSTRIAL APPLICABILITY

The head-up display according to the present disclosure is suitable for a head-up display in which high image quality is required, such as, for example, a head-up display for use in a vehicle.

REFERENCE MARKS IN THE DRAWINGS

| | |
|---|---|
| 100 | head-up display |
| 110 | display device |
| 111 | display surface |
| 120 | projection optical system |
| 121 | first mirror (first reflective element) |
| 121a | reflective surface of first reflective element |
| 121c | reference intersection point |
| 1211 | perpendicular |
| 121u | perpendicular |
| 122 | second mirror (second reflective element) |
| 122a | reflective surface of second reflective element |
| 130 | opening |
| 131 | opening cover |
| 140 | housing |
| 150 | light shield |
| 160 | refractive optical system |
| 170 | reference tangent plane |
| 1701 | vertically lower point |
| 170u | vertically upper point |
| 200 | vehicle |
| 210 | dashboard |
| 220 | windshield |
| 300 | viewing area |
| D | observer |
| I | virtual image |
| Bc | reference intersection line |
| Lc | reference light beam |
| Ll | light beam to form lower end of virtual image |

Lu     light beam to form upper end of virtual image

**Claims**

1.  A head-up display comprising:

    a display device (110) having a display surface (111) for displaying an image; and
    a projection optical system (120) for projecting an image displayed on the display surface (111) onto a viewing area for an observer,
    wherein the projection optical system (120) includes a first reflective element (121) and a second reflective element (122) in order along an optical path from the display surface (111) to the viewing area,
    wherein a reflective surface (121a, 122a) of at least one of the first reflective element (121) and the second reflective element (122) has a concave shape,
    a light beam that is emitted from a center of the display surface (111) and reaches a center of the viewing area is referred to as a reference light beam (Lc),
    an intersection of the reference light beam (Lc) with the reflective surface (121a) of the first reflective element (121) is referred to as a reference intersection point (121c),
    a plane including the reference light beam (Lc) incident on the first reflective element (121) and the reference light beam (Lc) reflected by the first reflective element (121) is referred to as a reference plane,
    an intersection line of the reflective surface (121a) of the first reflective element (121) with the reference plane is referred to as a reference intersection line (Bc),
    a tangent plane of the reflective surface (121a) of the first reflective element (121) at the reference intersection point is referred to as a reference tangent plane (170),
    respective heights from two points, a vertically upper point (170u) and a vertically lower point (1701), which are equidistant from the reference intersection point (121c) on the reference tangent plane (170), to the reflective surface (121a) of the first reflective element (121) are referred to as a sag, and
    when perpendiculars (121u, 1211) extending from the two points, the vertically upper point (170u) and the vertically lower point (1701), and normal to the reference tangent plane (170) intersect with the reference intersection line (Bc), a sag at the vertically upper point (170u) is greater than a sag at the vertically lower point (1701).

2.  The head-up display according to claim 1, wherein
    the reference light beam (Lc) incident on the second reflective element (122) has a horizontal vector component directed toward the display surface (111), and
    the head-up display satisfies the following condition (1):

$$1.7 < DL1/DL2 \ ... (1)$$

    where

    DL1 is an optical path length of the reference light beam (Lc) between the display device (110) and the first reflective element (121), and
    DL2 is an optical path length of the reference light beam (Lc) between the first reflective element (121) and the second reflective element (122).

3.  The head-up display according to claim 1, wherein
    the head-up display is installed in a vehicle (200), and
    the reference light beam (Lc) incident on the first reflective element (121) has a vector component directed forward of the vehicle (200).

4.  The head-up display according to claim 1, wherein the reflective surface (122a) of the second reflective element (122) has a concave shape.

5.  The head-up display according to claim 1, wherein a reflective area of the second reflective element (122) is greater than a reflective area of the first reflective element (121).

6. The head-up display according to claim 1, wherein a reflective area of the second reflective element (122) has a rotationally asymmetric free-form surface shape.

7. The head-up display according to claim 1, wherein at least part of the display surface (111) of the display device (110) is located vertically above the second reflective element (122).

8. The head-up display according to claim 1, further comprising a light shield (150) located on a virtual line connecting an upper end of the display surface (111) and an end of a vehicle forward of the reflective surface (122a) of the second reflective element (122).

9. The head-up display according to claim 1, wherein the head-up display satisfies the following condition (2):

$$5 < IL < 25 \ ... (2)$$

where
IL is an emission angle (degrees) of the reference light beam (Lc) emitted from the display device (110).

10. The head-up display according to claim 1, wherein the head-up display satisfies the following condition (3):

$$25 < I2 < 45 \ ... (3)$$

where
I2 is an angle of incidence (degrees) of the reference light beam (Lc) incident on the second reflective element (122).

11. A vehicle comprising the head-up display according to claim 1.

**Patentansprüche**

1. Headup-Display, das umfasst:

eine Anzeigevorrichtung (110), die eine Anzeigefläche (111) zum Anzeigen eines Bildes aufweist; sowie
ein optisches Projektionssystem (120) zum Projizieren eines auf der Anzeigefläche (111) angezeigten Bildes auf einen Betrachtungsbereich für einen Beobachter,
wobei das optische Projektionssystem (120) ein erstes reflektierendes Element (121) und ein zweites reflektierendes Element (122) der Reihe nach entlang eines optischen Weges von der Anzeigefläche (111) zu dem Betrachtungsbereich enthält,
eine reflektierende Fläche (121a, 122a) des ersten reflektierenden Elementes (121) oder/und des zweiten reflektierenden Elementes (122) eine konkave Form hat,
ein Lichtstrahl, der von einer Mitte der Anzeigefläche (111) emittiert wird und eine Mitte des Betrachtungsbereiches erreicht, als ein Bezugs-Lichtstrahl (Lc) bezeichnet wird,
eine Überschneidung des Bezugs-Lichtstrahls (Lc) mit der reflektierenden Fläche (121a) des ersten reflektierenden Elementes (121) als Bezugs-Schnittpunkt (121c) bezeichnet wird,
eine Ebene, die den auf das erste reflektierende Element (121) einfallenden Bezugs-Lichtstrahl (Lc) und den von dem ersten reflektierenden Element (121) reflektierten Bezugs-Lichtstrahl (Lc) einschließt, als eine Bezugs-Ebene bezeichnet wird,
eine Schnittlinie der reflektierenden Fläche (121a) des ersten reflektierenden Elementes (121) mit der Bezugs-Ebene als eine Bezugs-Schnittlinie (Bc) bezeichnet wird,
eine Tangentialebene der reflektierenden Fläche (121a) des ersten reflektierenden Elementes (121) an dem Bezugs-Schnittpunkt als eine Bezugs-Tangentialebene (170) bezeichnet wird,
jeweilige Höhen von zwei Punkten, eines vertikal oben liegenden Punktes (170u) und eines vertikal unten liegenden Punktes (170l), die von dem Bezugs-Schnittpunkt (121c) auf der Bezugs-Tangentialebene (170) gleich weit entfernt sind, zu der reflektierenden Fläche (121a) des ersten reflektierenden Elementes (121) als ein Durchhang bezeichnet werden, und
wenn sich Senkrechte (121u, 121l), die sich von den zwei Punkten, dem vertikal oben liegenden Punkt (170u) und dem vertikal unten liegenden Punkt (170l), erstrecken und senkrecht zu der Bezugs-Tangentialebene (170) sind, die Bezugs-Schnittlinie (Bc) schneiden, ein Durchhang an dem vertikal oben liegenden Punkt (170u) größer ist als ein Durchhang an dem vertikal unten liegenden Punkt (170l).

2. Headup-Display nach Anspruch 1, wobei
der auf das zweite reflektierende Element (122) auf treffende Bezugs-Lichtstrahl (Lc) eine horizontale Vektorkomponente hat, die auf die Anzeigefläche (111) zu gerichtet ist, und
das Headup-Display die folgende Bedingung erfüllt (1):

$$1,7 < DL1/DL2 \ldots (1)$$

wobei

DL1 eine optische Weglänge des Bezugs-Lichtstrahls (Lc) zwischen der Anzeigevorrichtung (110) und dem ersten reflektierenden Element (121) ist, und
DL2 eine optische Weglänge des Bezugs-Lichtstrahls (Lc) zwischen dem ersten reflektierenden Element (121) und dem zweiten reflektierenden Element (122) ist.

3. Headup-Display nach Anspruch 1, wobei
das Headup-Display in einem Fahrzeug (200) installiert ist und
der auf das erste reflektierende Element (121) auftreffende Bezugs-Lichtstrahl (Lc) eine Vektorkomponente hat, die vor das Fahrzeug (200) gerichtet ist.

4. Headup-Display nach Anspruch 1, wobei die reflektierende Fläche (122a) des zweiten reflektierenden Elementes (122) eine konkave Form hat.

5. Headup-Display nach Anspruch 1, wobei ein reflektierender Bereich des zweiten reflektierenden Elementes (122) größer ist als ein reflektierender Bereich des ersten reflektierenden Elementes (121).

6. Headup-Display nach Anspruch 1, wobei ein reflektierender Bereich des zweiten reflektierenden Elementes (122) die Form einer rotationsasymmetrischen Freiformfläche hat.

7. Headup-Display nach Anspruch 1, wobei wenigstens ein Teil der Anzeigefläche (111) der Anzeigevorrichtung (110) vertikal über dem zweiten reflektierenden Element (122) angeordnet ist.

8. Headup-Display nach Anspruch 1, das des Weiteren eine Lichtabschirmung (150) umfasst, die sich auf einer virtuellen Linie befindet, die ein oberes Ende der Anzeigefläche (111) und ein Ende eines Fahrzeugs vor der reflektierenden Oberfläche (122a) des zweiten reflektierenden Elementes (122) verbindet.

9. Headup-Display nach Anspruch 1, wobei
das Headup-Display die folgende Bedingung erfüllt (2):

$$5 < IL < 25 \ldots (2)$$

wobei
IL ein Emissionswinkel (°) des von der Anzeigevorrichtung (110) emittierten Bezugs-Lichtstrahls (Lc) ist.

10. Headup-Display nach Anspruch 1, wobei
das Headup-Display die folgende Bedingung erfüllt (3):

$$25 < I2 < 45 \ldots (3)$$

wobei

I2 ein Auftreffwinkel (°) des auf das zweite reflektierende Element (122) auftreffenden Bezugs-Lichtstrahls (Lc) ist.

**11.** Fahrzeug, das das Headup-Display nach Anspruch 1 umfasst.

**Revendications**

**1.** Affichage tête haute comprenant :

un dispositif d'affichage (110) comportant une surface d'affichage (111) permettant d'afficher une image, et
un système optique de projection (120) permettant de projeter sur une zone de visualisation destinée à un observateur une image affichée sur la surface d'affichage (111),
dans lequel le système optique projection (120) inclut un premier élément réflecteur (121) et un second élément réflecteur (122) dans cet ordre le long du trajet optique allant de la surface d'affichage (111) à la zone de visualisation,
dans lequel une surface de réflexion (121a, 122a) d'au moins l'un du premier élément réflecteur (121) et du second élément réflecteur (122) présente une forme concave,
un faisceau lumineux qui est émis depuis le centre de la surface d'affichage (111) et qui atteint le centre de la zone de visualisation est appelé faisceau de lumière de référence (Lc),
l'intersection du faisceau de lumière de référence (Lc) avec la surface de réflexion (121a) du premier élément réflecteur (121) est appelée point d'intersection de référence (121c),
le plan incluant le faisceau de lumière de référence (Lc) incident sur le premier élément réflecteur (121) et le faisceau de lumière de référence (Lc) réfléchi par le premier élément réflecteur (121) est appelé plan de référence,
la ligne d'intersection de la surface de réflexion (121a) du premier élément réflecteur (121) avec le plan de référence est appelée ligne d'intersection de référence (Bc),
le plan tangent de la surface de réflexion (121a) du premier élément réflecteur (121) au niveau du point d'intersection de référence est appelé plan tangent de référence (170),
les hauteurs respectives à partir de deux points, un point supérieur verticalement (170u) et un point inférieur verticalement (1701), qui sont équidistants du point d'intersection de référence (121c) sur le plan tangent de référence (170) à la surface de réflexion (121a) du premier élément réflecteur (121) sont appelés une flèche, et
lorsque les orthogonales (121u, 1211) qui s'étendent depuis les deux points, le point supérieur verticalement (170u) et le point inférieur verticalement (1701), et qui sont normales au plan tangent de référence (170), se coupent avec la ligne d'intersection de référence (Bc), la flèche au niveau du point supérieur verticalement (170u) est plus grande que la flèche au niveau du point inférieur verticalement (1701).

**2.** Affichage tête haute selon la revendication 1, dans lequel :

le faisceau de lumière de référence (Lc) incident sur le second élément réflecteur (122) présente une composante vectorielle horizontale dirigée vers la surface d'affichage (111), et
l'affichage tête haute satisfait à la condition (1) suivante :

$$1,7 < DL1 / DL2 \text{ ... (1)}$$

où

DL1 représente la longueur du trajet optique du faisceau de lumière de référence (Lc) entre le dispositif d'affichage (110) et le premier élément réflecteur (121), et
DL2 représente la longueur du trajet optique du faisceau de lumière de référence (Lc) entre le premier élément réflecteur (121) et le second élément réflecteur (122).

**3.** Affichage tête haute selon la revendication 1, dans lequel :

l'affichage tête haute est installé dans un véhicule (200), et
le faisceau de lumière de référence (Lc) incident sur le premier élément réflecteur (121) présente une composante vectorielle dirigée vers l'avant du véhicule (200).

**4.** Affichage tête haute selon la revendication 1, dans lequel la surface de réflexion (122a) du second élément réflecteur (122) présente une forme concave.

**5.** Affichage tête haute selon la revendication 1, dans lequel la surface de réflexion du second élément réflecteur (122) est plus grande que la surface de réflexion du premier élément réflecteur (121).

**6.** Affichage tête haute selon la revendication 1, dans lequel la surface de réflexion du second élément réflecteur (122) présente une forme de surface libre asymétrique en rotation.

**7.** Affichage tête haute selon la revendication 1, dans lequel au moins une partie de la surface d'affichage (111) du dispositif d'affichage (110) est située verticalement au-dessus du second élément réflecteur (122).

**8.** Affichage tête haute selon la revendication 1, comprenant en outre un écran contre la lumière (150) situé sur une ligne virtuelle reliant l'extrémité supérieure de la surface d'affichage (111) et l'extrémité du véhicule à l'avant de la surface de réflexion (122a) du second élément réflecteur (122).

**9.** Affichage tête haute selon la revendication 1, où :
l'affichage tête haute satisfait à la condition (2) suivante :

$$5 < IL < 25 \ldots (2)$$

où
IL représente l'angle d'émission (en degrés) du faisceau de lumière de référence (Lc) émis par le dispositif d'affichage (110).

**10.** Affichage tête haute selon la revendication 1, où :
l'affichage tête haute satisfait à la condition (3) suivante :

$$25 < I2 < 45 \ldots (3)$$

où
I2 représente l'angle d'incidence (en degrés) du faisceau de lumière de référence (Lc) incident sur le second élément réflecteur (122).

**11.** Véhicule comprenant l'affichage tête haute conforme à la revendication 1.

FIG. 1

# FIG. 2

# FIG. 3

EP 3 223 057 B1

FIG. 4

FIG. 5

# FIG. 6

# FIG. 7

FIG. 8

FIG. 9

# FIG. 10

EP 3 223 057 B1

# FIG. 11

EP 3 223 057 B1

# FIG. 12

EP 3 223 057 B1

# FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012058294 A
- JP H05341226 A
- JP 2007272061 A
- JP H04247489 B